# NEW EUROPEAN PATENT SPECIFICATION

(11) **EP 2 179 105 B2**
(45) Date of publication and mention of the opposition decision: **29.07.2015**
(45) Mention of the grant of the patent: 03.08.2011
(21) Application number: 08776250.6
(22) Date of filing: 10.07.2008
(51) Int. Cl.: E04C 1/42

(54) **TRANSLUCENT BUILDING BLOCK AND A METHOD FOR MANUFACTURING THE SAME**
DURCHSCHEINENDER BAUSTEIN UND HERSTELLUNGSVERFAHREN DAFÜR
BLOC DE CONSTRUCTION TRANSPARENT ET SON PROCÉDÉ DE FABRICATION

(30) Priority: 11.07.2007 HU 0700475
(43) Date of publication of application: 28.04.2010
(73) Proprietor: Losonczi, Aron, 6640 Csongrád (HU)
(72) Inventor: Losonczi, Aron, 6640 Csongrád (HU)
(74) Representative: Farkas, Tamas
(86) International application number: PCT/HU2008/000084
(87) International publication number: WO 2009/007765

(56) References cited:
- EP-A- 1 970 179
- WO-A-03/097954
- WO-A-2006/070214
- WO-A-2006/099874
- AT-B- 240 564
- AT-B- 355 274
- DE-A1- 3 701 425
- DE-A1- 19 634 599
- DE-A1- 19 818 648
- DE-A1-102005 062 407
- DE-U1-202007 000 753
- JP-A- 2006 220 981
- JP-A- 2006 224 349
- US-A- 3 492 384
- US-A- 3 822 336
- US-A- 5 297 772
- US-A1- 2007 074 484

## Description

This invention relates to a building block with translucent properties between a first boundary surface and a second boundary surface spaced from the first boundary surface, the translucent properties are provided by discrete translucent members extending between the boundary surfaces and they are spaced form one another, the building block is formed by a cast material filling the spaces between the translucent members, the translucent members have sufficient rigidity to preserve their positions under the effect of forces applied by the casting of the cast material, the translucent members are interconnected by means of connection elements to constitute an integral mechanical structure.

The natural inner illumination of buildings is provided by windows created on the walls, ceilings or roof structures and containing translucent or transparent materials having weatherproof properties. Generally, these openings present great unbroken surfaces, but it is common to apply transparent, translucent, coloured, dyed or water-clear windows of different sizes or esthetical illumination purposes, dimensions of which fit to the dimensions of the building blocks used, i.e. in the case of glass bricks to be built, that is transparent members are built in between load bearing members like bricks. The number and the sizes of the transparent members are limited by economical, static, heat insulating and mechanical requirements relating to the closure members, walls and roofs, as above, properties of the translucent materials cannot easily be conformed to the complex architectural requirements.

The patent document GB 794,864 discloses a solution relating translucent building member, where the prefabricated building members consisting of a translucent member and a framework are disposed between load bearing building elements. The framework makes the building strength of the member independent from the mechanical strength of the translucent member. However, its disadvantage that it requires correct fitting of discrete elements at predetermined locations during building of the wall structure.

Wide spreading of cold-hardening, in situ form worked or prefabricated cement based building elements allows embedding of translucent elements into the building elements. Such a solution is disclosed in patent document US 3,091,899, where glass strips embedded randomly in a binding material guide the light between the two sides of the element. The strips project from at least one surface of the element. Such projecting strips encumber the bricklaying job and the load bearing property of a wall consisting of such elements is limited to a great extent because of the risk of slipping at contact areas between the glass and binding material.

Improved handling and strength properties can be obtained by solutions applying glass fibres arranged in a binding matrix such as concrete. The patent document JP 2006224349 discloses a method comprising the steps of arranging a glass fiber fabric into a mould cavity, filling the mould cavity with concrete up to the-level of the fabric, and then repeating above procedure until the cavity is filled up. Disadvantage of this method is that it is very labour-intensive and the application of glass fibres involves extremely high costs.

Publication WO 03/097954 discloses a building block having translucent elements embedded in a structural building material cast in between the two surfaces of the building element, and both ends of the glass fibres are evenly distributed along the two surfaces. From the document US 2007/0074484 A1 a translucent concrete element is known, where glass fibres are spanned between two sheets of an auxiliary framework, then filling in the space among the fibres. Finally, moving away the sheets of the auxiliary framework, a translucent building block is obtained. Shortcoming of both solutions relates to their costs incurred by the application of glass fibres.

WO 03/097954 discloses a building block and a method of its production, where a bunch of glass fibres is continuously introduced into a longitudinal mould, while filling in the mould with a binding material matrix and upsetting it by vibration and/or pressure. The solidified element is cut across its cross section into elements, then preferably machining the surfaces thus obtained. An advantage of this solution is the continuous production, but applying glass fibres is a shortcoming also in this case.

A further common disadvantage of the solutions above that the translucent members are positioned randomly or the grouping of members is labour intensive or impossible.

Above shortcomings are intended to solve by the solution disclosed in document JP1219251, where openings are formed in a flexible or rigid retainer sheet, translucent members, i.e. glass prisms are placed in the openings, then covering the sheet by a concrete layer having a height according to the height of the prisms. After setting of the concrete layer the flexible sheet will be made away and at least one of the surfaces of the member has to be machined. In the case of a rigid retainer sheet, it remains on the surface. Disadvantage of this solution is that the adequate forming of the retainer sheet having no role in the light guidance requires further dead-works and costs, and remaining on the building member it restrains application thereof, in the case of removing it forms wastes, moreover, in the case of production of thicker building blocks or applying slimmer and/or less rigid translucent members there is no solution for fixing the relative position of the translucent members neither to each other nor to the mould, since the retainer sheet is in the largest possible distance from either of the surfaces of the building member, furthermore, the solution is inadequate for vertical production of building blocks in the absence of adequate fixing of the translucent members.

The patent document WO 2006/070214 discloses a light transmitting object and a method for manufacturing the same. The object comprises a substantially non-transparent solid material and rigid (non-flexible) inserts embedded in it, and the inserts can be transparent. The surface of the light-transmitting object is partly formed by a part of the surface of the transparent elements. The inserts are fastened to each other either by using adhesive binding material or by the interposition of intermediate distance members, the whole forming together a skeleton which is exposed to the liquid cast material. In this solution the prefabricating of the so called skeleton by bonding the different elements requires an intensive and time consuming handwork and indirect-materials like gluing agents as well. The shape, size and orientation of the translucent elements can largely differ. In certain embodiments the translucent elements can be plates extending between opposite sides of the building block and dividing it respective parts, so that the cast material cannot penetrate through the plate and will not constitute a uniform cast body. The lack of a uniform cast body has a negative effect on the mechanical strength, stability and rigidity of the whole block. In further embodiments the elements define very small spacings between them or complex shapes, and the cast material cannot fill such spaces in a perfect way or cannot provide the required strength. The way the transparent elements are arranged cannot provide an appropriate accuracy needed to position this skeleton in a mould for producing a light-transmitting object. Furthermore, there is no adequate teaching about how a skeleton is to be fixed and positioned during pouring the solid material in the mould.

Therefore, an object of this invention is to provide a translucent building block, which overcomes the shortcomings of the prior art, namely it can be produced easily at a low cost and in arbitrary sizes, there is no need to apply expensive indirect materials, as well as to provide a solution for fixing the relative position of the translucent members either to each other or to the mould in the case of production of thicker building blocks or applying slimmer and/or less rigid translucent members. Another object of the present invention is to be able to arrange translucent or transparent figurations; signs, figures and even works of art in solid walls, appearing by means of either natural or artificial light.

### Disclosure of the invention

To achieve the object of the present invention a translucent building block is provided made according to the attached claims 1-9.

Moreover, the invention discloses a method as claimed in claims 10-11.

The invention will be disclosed now in details by demonstrating preferred embodiments referring to the attached drawings. In the drawings:
- **Fig. 1.**: is a cross section of a preferred embodiment of the translucent building block according to the invention,
- **Fig. 2.**: is a perspective view of a preferred embodiment of the translucent building block according to the invention, with a translucent lettering and figuration on the surface of the building block,
- **Fig. 2a.**: a broken perspective view of a preferred embodiment of the translucent building block according to the invention, with an even distribution of the ends of translucent members on the surface of the building block,
- **Fig. 3a. and 3b.**: perspective views of preferred embodiments of the insert member essential to produce the building block according to the present invention,
- **Fig. 3c.**: shows a variant of the insert member according to the invention formed with two retainer structures,
- **Fig. 4.**: shows a retainer structure of a preferred embodiment of the insert member according to the invention, with openings and the holes receiving translucent members,
- **Fig. 5.**: shows a preferred embodiment of the insert member according to the invention, having translucent members shaped as annular cylinders,
- **Fig. 6.**: shows a lying formwork used to proceed the method according to the invention, with an insert member arranged therein,
- **Fig. 7.**: shows a standing formwork used to proceed the method according to the invention, with an insert member arranged therein,
- **Fig. 7a., 7b., 7c., 7d.**: are enlarged views of details marked in Fig. 7.

### Detailed description of preferred embodiments

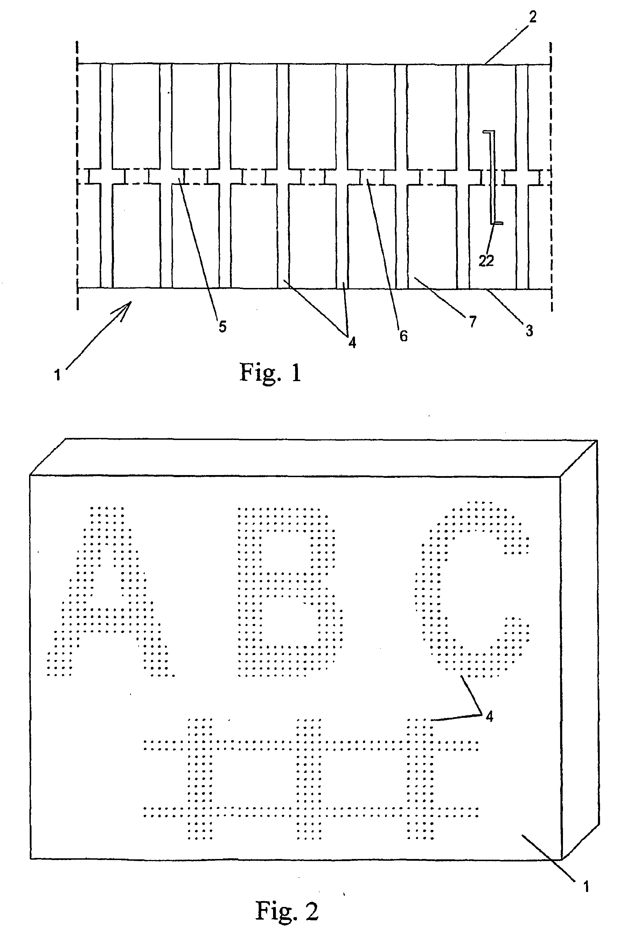

Fig. 1. is a cross section of a preferred embodiment of the translucent building block according to the invention. The translucent building block 1 shown has at least two, namely a first and a second bounding surfaces 3. In order to have translucent property the building block 1 has to have at least one, a plurality in the drawing, relatively rigid translucent member 4 having surfaces - preferably but non exclusively - fairly polished, and arranged at least partly between the first and a second bounding surfaces 3, so that the translucent member 4 is surrounded by cast material 7. In this description the term "relatively rigid" means a mechanical property allowing the translucent member to bear forces acting in the course of the flow of cast material 7 during moulding, without permanent deformation. In a preferred embodiment not shown in the drawing the translucent members 4 may protrude beyond the bounding surfaces 2, 3, that is the translucent members 4 may poke out of the building block 1. In order to fix the translucent members 4 in desired relative positions to each other the translucent members 4 are arranged in a relatively flat retainer structure 5, which can hold a plurality of translucent members 4 together. The term "relatively flat" means in this description that the retainer structure 5 is sheet like shaped. The retainer structure 5 may be formed i.e. as a planar retainer structure 5, or as a retainer structure 5 formed by curvatures like sheet having rippled surface. It is shown in the drawing, that the retainer structure 5 is shaped as a sheet arranged between the two bounding surfaces 2, 3 in the building block 1 made. In a particular embodiment the retainer structure 5 forms one of the two bounding surfaces 2, 3, therefore, the retainer structure 5 is arranged between the two bounding surfaces 2, 3 in this particular embodiment, too.

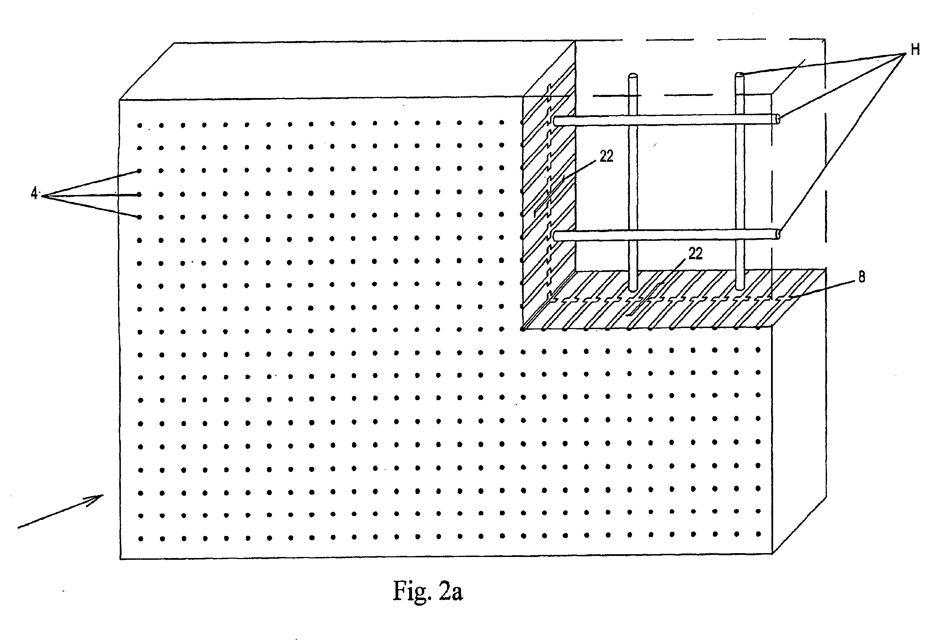

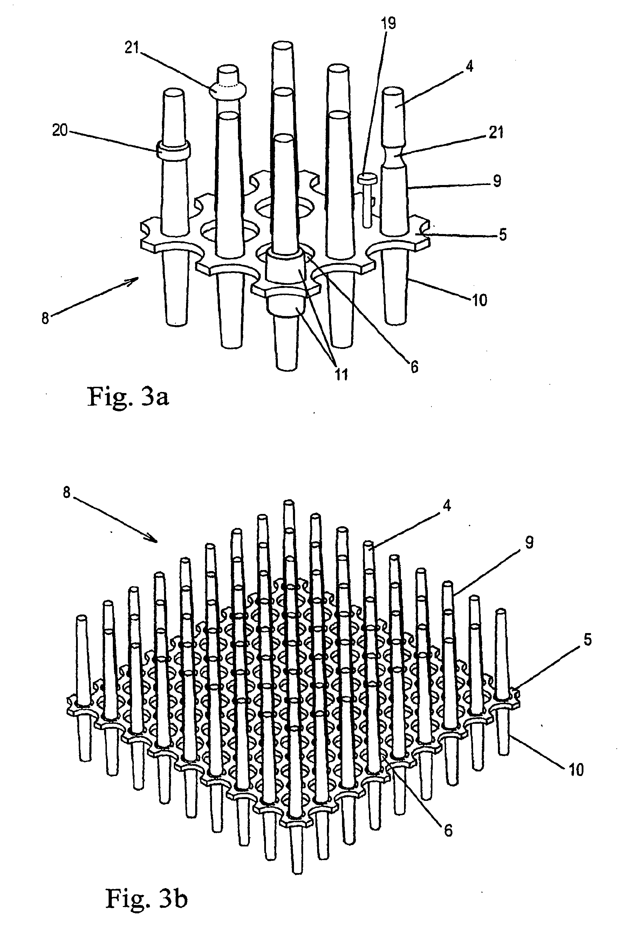

With the embodiment shown in Fig. 1 a plurality of translucent members 4 is arranged on the retainer structure 5 so that the translucent members 4 are substantially perpendicular to the retainer structure 5, though the angle between the translucent members 4 and the retainer structure 5 can differ from the right angle, that is the translucent members 4 generally stand transversally to the retainer structure. Among the translucent members 4 openings 6 are formed in the retainer structure 5. Openings 6 serve to connect the parts of the cast material 7 forming the building block 1 divided by the retainer structure 5, by means of the cast material flown through the openings 6 during moulding. Reinforcement pieces 22 or bracing members, i.e. pins, hooks made if steel or plastic can be arranged in the openings 6 formed on the retainer structure (5) (Fig 1. and 2a.) to further reinforce the connection between the parts of the building block 1 divided by the retainer structure. In a further advantageous embodiment (not shown in this Figure) bracing members 19, i.e. pins, hooks made of steel or plastic can be arranged in one or both sides of the retainer structure 5 attached thereto or formed in one piece therewith, in the place of the openings 6 or beside them, depending on mechanical requirements of building block 1 (Fig. 3a). It is also possible to arrange bracing members 20 on the translucent members 4, i.e. rings or the like, or to shape bracing members 20 on the translucent members 4 forming an undercut fixing the translucent member 4 inside the cast material 7. There is a possibility to arrange a linear or bar-mat reinforcement H well known in the art of armoured concrete, along the retainer structure 5 and beside and/or among the translucent members (4) (Fig 2a.). This reinforcement H may be connected to the reinforcement pieces 22 in the openings 6 or to bracing members 19, further enhancing the strength of the building block 1. The translucent members 4 arranged on the retaining structure 5 have in this embodiment a base shape of a regular plane figure, i.e. a circle, a triangle or a polygon spaced apart by equal distances. The base of the translucent members 4 may have of course an irregular boundary, too. For example, on the retainer structure 5 might be arranged one or more translucent member(s) 4 having a base of figural contour, i. e. of a shape of a star or like. Moreover, translucent members 4 can be spaced apart by arbitrary or unequal distances, by means of which figures or letterings may also be formed on the surface of a building block 1. In this case the translucent member 4 have, in one hand, a base of arbitrarily guided contour, i.e. a letter, a number, or a figure, or, in the other hand, an adequate arrangement of translucent members 4, i.e. a figure or lettering formed by dots. The translucent member 4 may preferably be made of glass as inorganic material, or of an organic one as translucent plastic, i.e. PMMA poly(metyl-metacrilate), PC (polycarbonate), or COC (cyclo-olefin copolymer), etc.

As it has already been noted, translucent members are held together by a retainer structure 5. Retainer structure 5 and translucent members 4 held thereby together form an insert member 8, which can have varied shapes as above mentioned. Moreover, the same building block 1 might contain one or more insert members 8 depending on relation between the size of the insert member 8 and that of the building block 1, as well as on the desired size of translucent surface part of the building block 1. It can be shaped a building block 1 having boundary surfaces 2, 3 fully crowded by equally spaced apart translucent members' 4 ends, but at the same time a building block 1 having boundary surfaces 2, 3 containing translucent members' 4 ends in discrete areas can also be made (Fig 2).

Translucent members 4 are surrounded by cast and solidified cast material 7, preferably concrete. It must be noted, however, that the cast material 7 may not exclusively be concrete. As cast material one can use other building materials that pours well and then it solidifies, i.e. plaster. These materials, especially the concrete, have excellent heat conductivity, hence the building block 1 may be provided with a heat insulation delaying heat transfer between boundary surfaces 2, 3, but it does not form an obstacle to the light guidance of the translucent members 4, as well as it does not decrease the mechanical strength of the building block 1. therefore, in a preferred embodiment of the invention, the surface of the retainer structure 5 is covered by heat insulating material. In this case the retainer structure 5 is covered i. e. by expanded plastic foam sheet as heat insulating material, so as this sheet has openings only at places of translucent members 4, and reinforcement pieces 22 pierced into the foam may be placed in openings 6. In a most preferred embodiment of the invention the retainer structure 5 in itself is made of improved heat insulating material. i.e. expanded plastic foam sheet having openings corresponding to the translucent members 4 in place and size, and translucent members 4 are transversally received in these openings.

Fig. 3a. and 3b. show preferred embodiments of the insert member 8 essential to produce the building block 1 according to the present invention. Insert member 8 shown in Fig 3a. is formed of several translucent members 4 and a retainer structure 5, so as the translucent members 4 are arranged spaced apart of equal distances on the retainer structure 5. Translucent members 4 have a first section 9 and a second section 10 protruding from the one side and from the other side of the retainer structure 5, respectively. It can be shown in Fig. 3a. that the lengths of sections 9, 10 of the translucent members 4 are not equal in this embodiment, in order to locate the optional reinforcement H supported by the retainer structure 5 into a statically right mid position. Naturally, sections with equal lengths may also be used. In a further embodiment not shown in the drawing sections 9, 10 of the translucent members 4 protrude transversally, that is they have an angle inclined other than 90° to the plane of the retainer structure 5, moreover, they are optionally not parallel to each other. There is the only requirement in relation to the light guidance that the ends of the sections 9, 10 reach at least the boundary surfaces 2, 3 during production of the building element 1.

It is further shown in Fig. 3a. the retainer structure 5 has openings 6 formed among the translucent members 4. Openings 6 have a complex function. They serve to in one hand that in the mould cavity crowded with insert members the 8 cast material 7 may flow across the retainer structure 5, and in the other hand, the cast material flown across the openings 6 connect the parts of the building block 1 divided by means of the retainer structure 5. Moreover, the opening s can receive reinforcement members 22, but not only the elements of a bar-mat structure, but i.e. pins, hooks made either of steel or plastic, or equivalent members.

In a further preferred embodiment, as this possibility has already been mentioned in relation of the Fig 1., bracing members 19, i.e. pins, hooks made of steel or plastic can be arranged in the retainer structure 5 attached thereto or formed in one piece therewith, in the place of the openings 6 or beside them (Fig 3a.). Bracing members 19 may be fixed on the retaining structure 5 i.e. by means of an adhesive or screw means , etc., well known in itself in the art. Further, also possible to arrange bracing members 20 on the translucent members 4, i.e. rings or the like, or to shape bracing members 21 on the translucent members 4 itself.

The translucent members 4 and the retainer structure 5 shown in Fig. 3a. and 3b. are made of the same material. This means generally, but not exclusively, that the insert member 8 are preferably formed as a one piece member made of a single material, i.e. PMMA poly(metyl-metacrilate), PC (polycarbonate), or COC (cyclo-olefin copolymer), etc, by way of injection moulding. Fig. 3b. shows a one piece made insert member 8 containing several translucent members 4.

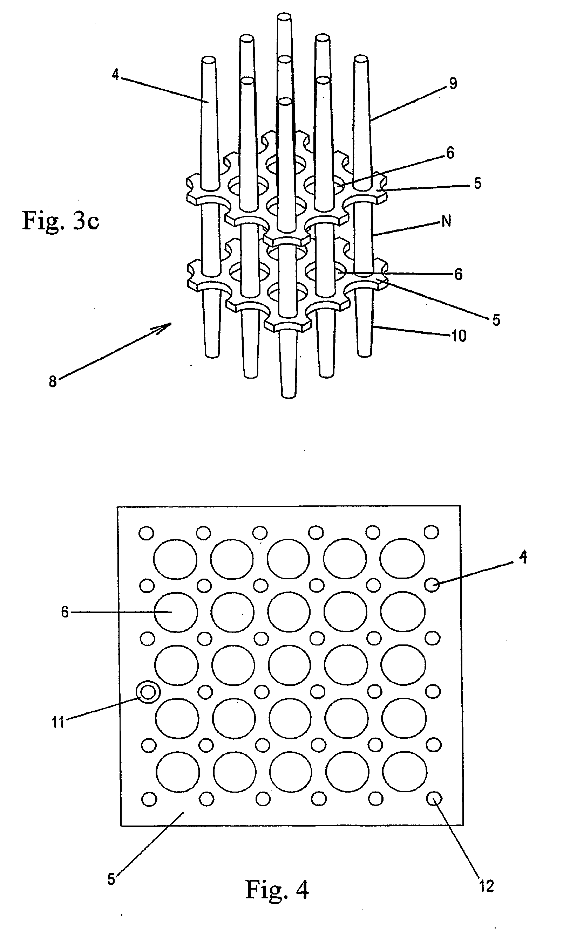

However, particularly with the use of larger translucent members 4, the insert member 8 may be made of a single material, but in the form of an assembled structure, where the retainer structure 5 with the openings 6 is made of a plastic by way of injection moulding, and short stubs 11 are protruding at the places of the translucent members 4 (Fig. 3a.), into which sections 9, 10 injection moulded or cut from a rod may be attached by means of bores formed in their ends, by threads or close fit. Thus it is possible to form further openings 12 in the place of above mentioned short stubs 11, or both but in different locations, which openings 12 are similar to the openings 6 (Fig. 4.). In this embodiment the translucent members 4 having adequate diameter are fitted in the openings 12 by means of close or snap fit, or they may be attached or threaded to the stubs 11, etc., respectively. In a more preferable embodiment the function of openings 6 and 12 may be changed. Moreover, the assembled structure embodiment enables the translucent members 4 or their sections 9, 10 to be made of different kind of material having different colours.

As it has been mentioned above, both the single piece made and the assembled insert member 8 enables to be heat insulated. An insert member 8 made of a single piece may receive a heat insulating layer having openings to be pulled on the respective sections 9, 10 translucent members 4 and some other openings of which are aligned with the openings 6 of the retainer structure 5. Thus the surface of the retainer structure 5 is covered by the insulating layer. Also the assembled insert member 8 having openings 12 may be provided with heat insulating structure, but in this case the retainer structure 5 itself might be made of a heat insulating material, i.e. polystyrene cell foam. Thus the retainer structure 5 itself consists of a heat insulating layer.

The material of the insert member 8 is an organic material, preferably plastic, in the embodiment shown. However the insert member may be made of inorganic material as glass, nevertheless in the case of the assembled one, it is possible to make it of a combination of organic and inorganic materials, i.e. with a retainer structure 5 having openings 6, 12 and made of plastic foam, and with translucent members 4 made of glass or translucent plastic material arranged in the openings 6, etc. The sections 9, 10 of the translucent member 4 are prisms having a base that may be chosen almost arbitrarily, i.e. circle, ellipse, triangle, quadrilateral or a polygon, or a plane figure terminated by several regular or irregular lines.

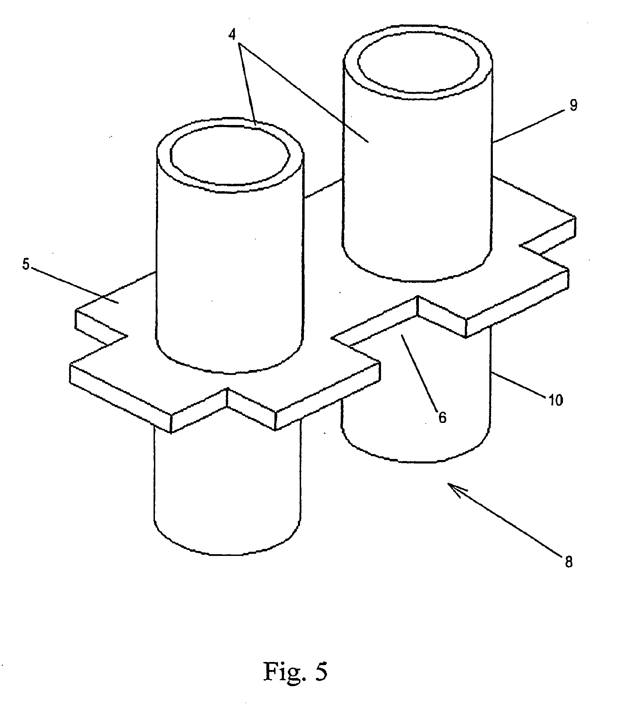

Thus, in a further embodiment of the insert member 8 according to the invention, there is a possibility to arrange translucent members 4 in the retainer structure 5, which, unlike the embodiments above, has a base plane figure terminated by two regular or irregular lines along both the retainer structure 5 and the bounding surfaces 2, 3, i.e. figural lines or by two circles that is a circular ring, as shown in Fig. 5. In Fig 5. sections 9, 10 of the translucent members 4 arranged on the retainer structure 5 consist of prisms having a base of a circular ring, that is a cylinder ring in both sides of the retainer structure 5.

Although with the embodiments shown in the drawings the insert member 8 contains only one retainer structure 5, it is evident that embodiments having more than one parallel or angled retainer structures fall within the scope of the invention. These embodiments may be advantageous in case of long translucent members 4 (for thick building blocks 1). In this case the translucent members 4 have further section(s) N arranged between the retainer structures 5 (Fig. 3c). Therefore, in this description the first and second sections 9, 10 of the translucent members 5 project from a retainer structure 5 of the insert member 8 being most closer to a boundary surface of the building block 1. The sections 9, 10, N of each translucent member 4 are continuous in regard to guiding of light, or having a light guide material, i.e, the material if the retainer structure 5, arranged therebetween.

As it was mentioned above the mechanical strength of the building block 1 can be improved by arranging a linear or bar-mat reinforcement H along the retainer structure 5 and beside and/or among the translucent members 4. Reinforcement H may be even in contact the retainer structure 5. For preparing and filling the mould cavity 17 the adequate positioning and fixing of the reinforcement H might also be provided by the retainer structure 5. The distance between the translucent members 4 are designed so that the reinforcement H can be accommodated therebetween. Reinforcement H may be linear or bar-mat structured. The elements of the reinforcement H connecting the two side layers of the cast material can be introduced into the openings formed in the retainer structure 5.

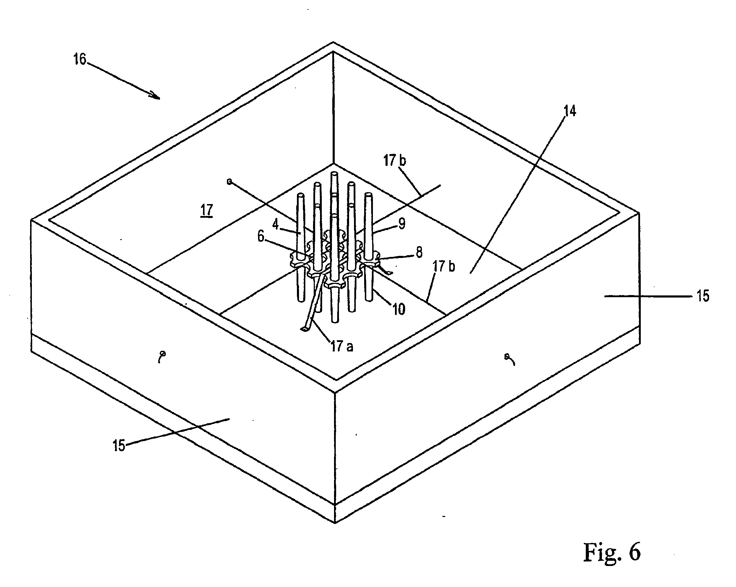

The building block according to the invention may be produced by a method according to the invention disclosed as follows. The method for manufacturing a translucent building block 1 comprises the steps of arranging one or more insert member(s) 8 as translucent element comprising of at least one retainer structure 5 and at least one translucent member 4 having at least one section 9, 10, N and protruding transversally from the retainer structure 5 into the mould cavity 17 of a formwork 16 delimited by at least a base surface 14 and side walls 15. Making contact between the sections 9, 10 of the translucent member 4 and the base surface 14 or sidewalls 15 of the mould cavity 17, positioning and fixing the insert member(s) 8 in the mould cavity 7. In the embodiment shown in Fig. 6, that is in the case of near horizontal moulding, at least one insert member 8 is accommodated on the base surface 14, that is the insert member 8 is supported by the base surface 14. Then, the insert member 8 can be fixed and positioned in the mould cavity 17 of the formwork 16, i.e. by means of a strap clamping 17a and/or wire-like fixing means 17b, one end of which may be attached to the insert member 8 and the other one is fixed i.e. to the side wall 15, or by applying load by means of reinforcement H elements, i.e. by a bar-mat reinforcement H web superimposed from above onto the insert member 8. The wire-like fixing means 17b are preferably conduced across holes formed in the sidewalls 15 and the fixed there outside. The insert member 8 can be positioned and fixed by fitting the ends of the translucent members 4 into holes formed according to the size of the section 9, 10 ends in the base surface 14. Then the moulding cavity 17 and thus the openings 6 of the retainer structure 5 can be filled up with cast material 7 to be set, then removing the solidified building block 1 from the mould cavity 17.

If the moulding cavity 17 is not filled up completely by cast material 7 up to the upper ends of the sections 9, 10 farthest the base surface 14, a part of these sections 9, 10 protrudes beyond a boundary surface 2, 3 of the building block 1, that is only a part of the translucent members 4 is located between the boundary surfaces 2, 3 of the building block 1. In this case, after removing the building block from the mould cavity 17, the upper boundary surface 2 of the building block 1 might be machined to bring into plain alignment the ends of the translucent members 4 and the upper boundary surface 2. It is a matter of course that the boundary surface 2 will not be machined for aesthetical reasons, thus the translucent members 4 will be protruded from the building block 1 to be build. If holes corresponding to translucent members 4 are formed on the base surface 14 as mentioned above, the translucent members 4 may protrude from the lower boundary surface 3, too. Of course, also these ends can either be machined off or not, at choice.

Base surface 14 can be covered fully or partly by insert members 8. The latter case one can make a building block having translucent property only in a part of the boundary surfaces 2, 3, i. e. it presents a lettering or a pictogram (Fig. 2. and 6.). The insert member may also be connected to each other.

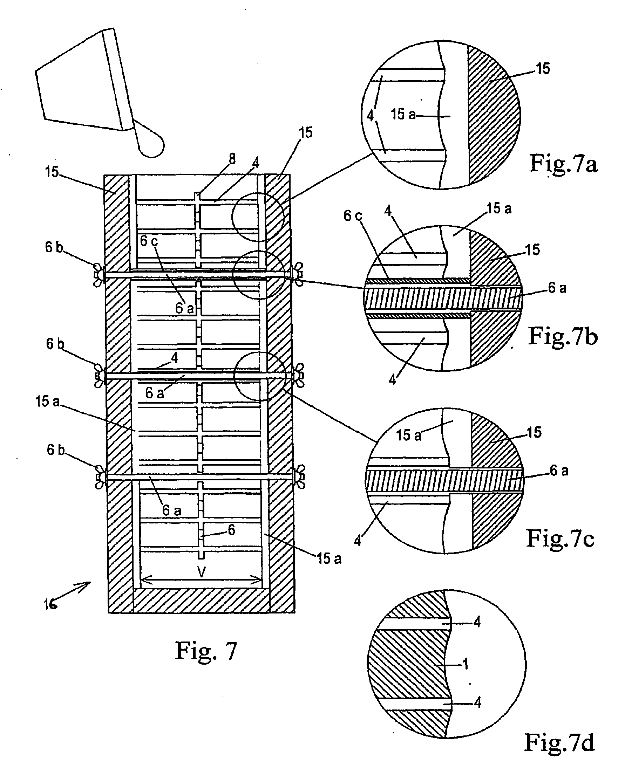

In the case of in situ production or prefabrication of a building block 1 there may be a need to form it in a vertical formwork 16, i.e as a wall (Fig 7.). In this embodiment of the method according to the invention the insert member 8 can be supported i.e. by an other insert member 8, that is a first insert member 8 will be placed onto the base surface 14 between the side walls of the formwork 15 so that adjusting the generatrices of the translucent members 4 substantially parallel to the base surface 14 and contacting the respective ends of section 9, 10 to the opposite side walls 15 of the formwork 16. Then imposing the next insert member 8 on the first one placed previously, so that the insert members 8 contact to each other i.e. by the edges of the retainer structure 5. This way one can fill in vertically the mould cavity 17 of the formwork 16. This process may be repeated in order to fill up the mould cavity 17 by insert members 8 totally or partly.

In a further preferred embodiment of the method according to the invention in the case of vertical production of the a translucent building block 1 the insert members 8 can be supported by fixing it to the side walls 15 of the formwork 16 rather than supported by the base surface 14 as above, by means i.e. of close fit by (constraining it between the opposite side walls 15) or fitting the insert members into holes formed according to the ends of the translucent members 4 in the side walls 15, or by gluing, etc., therefore the insert members 8 are supported by the side walls 15 anyway. Taking into account that the surfaces of the - particularly very large - formworks are rarely even and plain, moreover, the gluing and hole making mentioned above would be very time consuming or labour intensive, in a preferred embodiment of the invention at least the surfaces of the at least two opposite side walls 15 delimiting the mould cavity 17 is provided with a resilient liner, i.e. a sheet liner 15a made of a material having adequate elasticity or being able to become locally deformed if exposed to a pressure, and into which the ends of the translucent members 4 may be depressed, as it can be seen in the Figures 7a., 7b., 7d. The resilient sheet 15a may be made of gum or plastic chosen adequately, but i.e. glass fibre fabric sheet 15a is also applicable. Figures 7a., 7b., 7c., 7d. show enlarged cross sectional views of a building block 1 in the formwork 16 taken perpendicularly to the sidewalls 15. The surface of the building block 1 thus achieved may be machined off i.e. to be flat - in despite of its markedly aesthetic raw exterior - as previously disclosed.

At least two opposite side walls 15 of the formwork 16 showed in Fig. 7. can be fixed to each other by means of clamping means, which i.e. consists of a bar 6a passed through opening 6 and at least one hole formed in the side wall 15 and in the liner 15a - i.e. a threaded concrete steel bar 6a having nuts driven thereto outside the sidewalls 15 -, that is the side walls may be prestressed this way according to the size of the building block to be produced, if the translucent members 4, as spacers, can bear the necessary prestressing force without damage. Thus the bars 6a will remain inside the building block 1 prepared in the formwork 16 (Fig. 7., 7a.,7d.), acting as reinforcement pieces 22 demonstrated in Fig. 1. The end portions of the bars 6a protruding beyond the surfaces 2, 3 may be machined off, or it cab be used as means for moving the building block 1 and/or for fixing of fittings, etc.

If the translucent members 4 placed into the formwork 16 are not able to bear without damages the force necessary to prestress the formwork 16 - from a large thickness V of the building block 1 to be produced - spacers or distance members i.e. a distance bar 6c or a distance, pipe having at least the same length or longer than the total length of the translucent members 4 can be arranged parallelly around the bars 6a to relieve the translucent members 4. In this case the difference between the total length of the distance bar 6c and that of the translucent member 4 is between 0 and twice of the thickness of the liner 15a, and preferably less than the thickness of the liner 15a. In this embodiment the distance bars 6a or spacers remained inside the building block 1 act as reinforcement pieces 22 demonstrated in Fig. 1, though reinforcement pieces 22 are also applicable if necessary. The outer surface of the distance bars 6c adjoining the material of the building block 1 may be roughed or provided with claws etc. in order to the better fixing. In an embodiment showed in Fig. 7b. the bar 6a can be conduced inside the translucent member 4 and it will be removable after the building block 1 has been finished.

It has been mentioned that the surface of the retainer structure 5 of the insert member 8 might be provided with heat insulating material, before filling up the mould cavity 17 by cast material 7, if necessary. However, the cast material 7 itself may consist of heat insulating material, i.e. concrete mixed with an admixture producing air holes or bubbles, or concrete mixed with polystyrene beads. Before filling up the moulding cavity 17 reinforcement pieces 22 or reinforcement elements, i.e. distance bars 6c, can be arranged in the openings 6, and a bar-mat reinforcement H web known in the concrete art can be placed along the retainer structure 5 and among the translucent members 4, as disclosed above in connection of Fig. 2a. Reinforcement H may be connected to the reinforcement pieces 22 or conduced across the openings 6.

After the building block 1 removed from the moulding cavity 17, that is removing it from the formwork 16 or after the formwork 16 demolished etc., the surface of the building block 1 can be machined as necessary.

The main advantage of the translucent building block according to the invention against the solutions of the prior art is that it can be produced easily at a low cost and in arbitrary sizes, even at a building site, there is no need to apply expensive indirect materials forming wastes, as well as the fixing of relative position of the translucent members either to each other or to the mould in the case of production of thicker building blocks or applying slimmer and/or less rigid translucent members is provided. Moreover, even translucent or transparent figurations, signs, figures and or even works of art in can be provided in solid walls, appearing by means of either natural or artificial light.

## Claims

1. Building block (1) having translucent properties between a first boundary surface (2) and a second boundary surface (3) spaced from the first boundary surface (2), wherein the translucent properties are provided by discrete translucent members (4) extending between said boundary surfaces (2,3) end being spaced form one another, wherein said building block (1) is formed by a cast material (7) filling the spaces between the translucent members (4), wherein said translucent members (4) have sufficient rigidity to preserve their positions under the effect of forces applied by the casting of said cast material, wherein said translucent members (4) are interconnected by means of connection elements to constitute an integral mechanical structure, and said translucent elements (4) are arranged in at least one discrete group and are constituted by rods with respective closed cross sectional profile, wherein said connection elements are constituted by at least one substantially flat retainer structure (5) of a single sheet material extending in transversal direction relative to said translucent elements (4) and being connected to all of said translucent elements (4) in said at least one group, wherein a first section (9) of the translucent elements (4) which extend out from one side of the retainer structure (5) in contact with said first boundary surface (2) and a second section (10) of the translucent elements (4) which extend out from the other side of the retainer structure (5) is in contact with said second boundary surface (3), wherein sections (9,10, N) of each translucent member (4) are continuous in regard to guiding of light, or having light guide material arranged therebetween, **characterised in that** said retainer structure (5) has openings (6) between said translucent elements for providing space for the cast material to flow in and to interconnect said two boundary surfaces (2,3).

2. The building block as claimed In claim 1, **characterized by** comprising at least one further retainer structure spaced from said first retainer structure (5) along the length of said translucent members (4) being also connected to all of said members (4), whereby said members having intermediary sections (N) between said first and second sections (9, 10).

3. The building block as claimed in any claim 1-2, **characterized in that** in said first, second and/or intermediate sections (9, 10, N) of said translucent members (4) shaped profiles or separate bracing members (20, 21) are provided for increasing the strength of connection to the cast material.

4. The building block as claimed in any claim 1-3, **characterized In that** the lengths of sections (9 and 10) of the translucent members (4) are different in order to locate the optional reinforcement (H) into a statically right mid position between said boundary surfaces (2,3).

5. The building block as claimed in any claim 1-4, **characterized in that** reinforcement pieces (22) are inserted in said openings (6) to increase connection of the cast material between the two aides of said retainer structure (5).

6. The building block as claimed in any claim 1-5, **characterized In that** said spacing between said translucent members (4) is identical in all directions, and said retainer structure (5) comprises a carrier of a sheet material defining openings for the passage and connection of the associated translucent element (4).

7. The building block as claimed In any claim 1-6, **characterized by** comprising a plurality of said discrete groups, said groups forming areas of a predetermined visual pattern to be displayed by said block.

8. The building block as claimed in any claim 1-7, **characterized In that** said translucent members (4) and said retainer structure (6) are formed as a single integral body moulded by a transparent plastic material.

9. The building block as claimed in any claim 1-8, **characterized In that** said first and second boundary surfaces (2, 3) are parallel and the ends of said translucent members (4) flush with or slightly extending out of said boundary surfaces (2.3).

10. Method for manufacturing the building block as claimed in claim 9, comprising the steps of arranging and positioning said Integral mechanical structure In a mould cavity (17) having at least opposing side walls (15) and a bottom, so that said translucent members (4) extend between said side walls (16) and filling the mould cavity (17) with a fluid moulding material (7), and following the setting of the moulding material separating the building block (1) and the mould cavity (17), **characterized In that** said arranging and positioning step comprises pressing slightly all of said translucent members (4) by constraining said sidewalls (15) together and by placing a resilient sheet (15a) between said translucent members (4) and at least one of said side walls (15).

11. The method as claimed in claim 10, **characterized In that** said resilient sheet (15a) is applied at the interior of both of said walls (15).

## Patentansprüche

1. Bauelement (1) mit lichtdurchlässigen Eigenschaften zwischen einer ersten Grenzfläche (2) und einer von der ersten Grenzfläche (2) beabstandeten zweiten Grenzfläche (3), wobei die lichtdurchlässigen Eigenschaften durch selbständige lichtdurchlässige Glieder (4) gewährleistet sind, die sich zwischen den Grenzflächen (2, 3) erstrecken und voneinander beabstandet sind, wobei das Bauelement (1) von einem gegossenen Formmaterial (7) gebildet ist, das die Räume zwischen den lichtdurchlässigen Gliedern (4) ausfüllt, wobei diese lichtdurchlässigen Glieder (4) eine ausreichende Steifheit aufweisen, um ihre Positionen unter der Wirkung der beim Giessen des Formmaterials auftretenden Kräfte zu bewahren, wobei die lichtdurchlässigen Glieder (4) mit Hilfe von Verbindungselementen miteinander verbunden sind, um eine integrierte mechanische Struktur zu bilden und diese lichtdurchlässigen Elemente (4) in wenigstens einer selbständigen Gruppe angeordnet und von Stäben mit entprechendem geschlossenem Querschnittsprofil gebildet sind, wobei die Verbindungselemente durch wenigstens eine im wesentlichen flache Haltevorrichtung (5) gebildet sind, die sich quer zu den lichtdurchlässigen Elementen (4) erstreckt und mit allen lichtdurchlässigen Elementen (4) in der wenigstens einer Gruppe verbunden ist, wobei ein erster Abschnitt (9) der lichtdurchlässigen Elemente (4), der sich über die eine Seite der Haltevorrichtung (5) hinaus erstreckt, ist im Kontakt mit der ersten Grenzfläche (2) und ein zweiter Abschnitt (10) der lichtdurchlässigen Elemente (4), der sich über die andere Seite der Haltevorrichtung (5) hinaus erstreckt, ist im Kontakt mit der zweiten Grenzfläche (3), und die Abschnitte (9, 10, N) jedes lichtdurchlässigen Gliedes (4) kontinuierlich hinsichtlich der Lichtführung sind oder ein lichtführendes Material zwischen sich aufweisen, **dadurch gekennzeichnet, dass** die Haltevorrichtung (5) zwischen den lichtdurchlässigen Gliedern (4) Öffnungen (6) hat, um für das Einfliessen des Formmaterials einen Raum zu schaffen und die beiden Grenzflächen (2, 3) miteinander zu verbinden.

2. Bauelement (1) nach Anspruch 1, **dadurch gekennzeichnet, dass** es wenigstens eine weitere, von der ersten Haltevorrichtung (5) beabstandete Haltevorrichtung entlang der Länge der lichtdurchlässigen Glieder (4) aufweist, die auch mit allen lichtdurchlässigen Gliedern (4) verbunden ist, wodurch diese Glieder über zwischenliegende Abschnitte (N) zwischen den ersten und zweiten Abschnitten (9, 10) verfügen.

3. Bauelement (1) nach einem der Ansprüche 1 bis 2, **dadurch gekennzeichnet, dass** in den ersten, zweiten und/oder zwischenliegenden Abschnitten (9, 10, N) der lichtdurchlässigen Glieder (4) Formprofile oder separate Verstärkungselemente (20, 21) für die Erhöhung der Festigkeit der Verbindung zum gegossenen Formmaterial vorgesehen sind.

4. Bauelement (1) nach einem der Ansprüche 1 bis 3, **dadurch gekennzeichnet, dass** die Längen der Abschnitte (9 und 10) der lichtdurchlässigen Glieder (4) verschieden sind, um die optionale Bewehrung (H) in einer statisch optimalen mittleren Position zwischen den Grenzflächen (2, 3) anzuordnen.

5. Bauelement (1) nach einem der Ansprüche 1 bis 4, **dadurch gekennzeichnet, dass** Bewehrungselemente (22) in die Öffnungen (6) eingesetzt sind, um die Verbindung des gegossenen Formmaterials zwischen den beiden Seiten der Haltevorrichtung (5) zu verstärken.

6. Bauelement (1) nach einem der Ansprüche 1 bis 5, **dadurch gekennzeichnet, dass** der Abstand zwischen den lichtdurchlässigen Gliedern (4) in allen Richtungen gleich ist und die Haltevorrichtung (5) einen Trager für ein Plattenmaterial aufweist, der Öffnungen für den Durchtritt und Verbindung des zugeordneten lichtdurchlässigen Elementes (4) definiert.

7. Bauelement (1) nach einem der Ansprüche 1 bis 6, **dadurch gekennzeichnet, dass** es eine Mehrzahl von selbständigen Gruppen aufweist, welche Gruppen Bereiche eines durch das Bauelement anzuzeigenden vorbestimmten visuellen Musters bilden.

8. Bauelement (1) nach einem der Ansprüche 1 bis 7, **dadurch gekennzeichnet, dass** die lichtdurchlässigen Glieder (4) und die Haltevorrichtung (5) einen einzigen, aus einem durchsichtigen Kunststoffinaterial gefonnten integrierten Körper aufweisen.

9. Bauelement (1) nach einem der Ansprüche 1 bis 8, **dadurch gekennzeichnet, dass** die erste und die zweite Grenzfläche (2, 3) zueinander parallel sind und die Enden der lichtdurchlässigen Glieder (4) mit diesen Grenzflächen (2, 3) fluchten, oder sie sich geringfügig über diese hinaus erstrecken.

10. Verfahren zur Herstellung eines Bauelementes gemäß Anspruch 9, bestehend aus den Schritten von Anordnung und Positionierung der integrierten mechanischen Struktur in einer Formhohlraum (17), die wenigstens gegenüberliegende Seitenwände (15) und einen Boden hat, so dass die lichtdurchlässigen Glieder (4) durch diese Seitenwände (15) hindurchragen, und Füllen des Formhohlraumes (17) mit einem fluiden Formmaterial (7), und nach dem Setzen des Formmaterials Trennung des Bauelementes (1) und des Formhohlraumes (17), **dadurch gekennzeichnet, dass** in dem Schritt von Anordnung und Positionierung alle lichtdurchlässigen Glieder (4) durch Zusammendrücken der Seitenwände (15) und durch Einlegen einer elastischen Platte (15a) zwischen die lichtdurchlässigen Glieder (4) und mindestens eine der Seitenwände (15) geringfügig zusammengepresst werden.

11. Verfahren nach Anspruch 10, **dadurch gekennzeichnet, dass** die entsprechenden elastischen Platten (15a) an den inneren Seiten der beiden Seitenwände (15) angeordnet sind.

## Revendications

1. Bloc de construction (1) ayant des propriétés translucides entre une première surface limite (2) et une seconde surface limite (3) espacée de la première surface limite (2), les propriétés translucides sont/étant ? fournis par des membres translucides (4) discrets étendus entre lesdites surfaces limites (2,3) et étant espacés l'une de l'autre, ledit bloc de construction (1) est formé par une matière moulée (7) remplissant l'espace entre les membres translucides (4), lesdites membres translucides (4) ayant une rigidité suffisante pour préserver leur positions sous l'effet des forces appliquées par le moulage de ladite matière moulée, lesdits membres translucides (4) sont reliés par d'éléments de connexion pour construire une structure mécanique intégrée, et lesdites éléments translucides (4) sont arrangés en au moins un groupe discret et sont constitués par des bâtons avec une coupe transversale fermée respective, lesdits éléments de connexion sont constitués par au moins une structure d'accrochage (5) substantiellement plate étendant dans une direction transversale par rapport desdits éléments translucides (4) et étant connectée à tous desdits éléments translucides (4) dans ledit au moins un groupe, un premier tronçon (9) des éléments translucides (4) lequel s'avance d'une côté de la structure d'accrochage (5) est en contact avec ladite première surface limite (2) et un second tronçon (10) des éléments translucides (4) lequel s'avance de l'autre côté de la structure d'accrochage (5) est en contact avec ladite second surface limite (3), et des tronçons (9, 10, N) de chaque membre translucide (4) sont continuels concertant la photoconductivité, ou il est arrangé une matière photoconductrice entre eux, **caractérisé en ce que** ladite structure d'accrochage (5) ayant des ouvertures (6) entre lesdits éléments translucides pour assurer de l'espace pour la matière moulée pour s'écouler dedans et pour relier lesdites deux surfaces limites (2, 3).

2. Bloc de construction selon la revendication 1, **caractérisé en ce qu'**il comprend au moins une autre structure d'accrochage espacée de ladite première structure d'accrochage (5) le long desdits membres translucides (4), aussi étant connectée à tous desdits éléments translucides (4), par quoi lesdits membres ont des tronçons intermédiaires (N) entre lesdits premier et second tronçons (9, 10).

3. Bloc de construction selon l'une quelconque des revendications 1 à 2, **caractérisé en ce que** dans lesdit premier, second et/ou intermédiaire tronçons (9, 10, N) desdits membres translucides (4) ils sont fournis des profils formés ou des membres de renforcement separés (20, 21) pour augmenter la force de liaison à la matière moulée.

4. Bloc de construction selon l'une quelconque des revendications 1 à 3, **caractérisé en ce que** le longeur des tronçons (9 et 10) des membres translucides (4) sont différents afin de localiser le renfort optionnel (H) à une position médiane statiquement droit entre lesdites surfaces limites (2, 3).

5. Bloc de construction selon l'une quelconque des revendications 1 à 4, **caractérisé en ce que** les pièces de renforcement (22) sont insérés dans lesdites ouvertures (6) pour augmenter le raccord de la matière moulée entre les deux cotés de ladite structure d'accrochage (5).

6. Bloc de construction selon l'une quelconque des revendications 1 à 5, **caractérisé en ce que** ledit espacement entre lesdits membres translucides (4) est le même dans toutes les directions, et ladite structure d'accrochage (5) comprend un support d'une matière en feuille définissant des ouvertures pour le passage et raccord de l'élément translucide associé (4).

7. Bloc de construction selon l'une quelconque des revendications 1 à 6, **caractérisé en ce qu'**il comprend une pluralité desdits groupes discrets, lesdits groups formant des régions d'un motif prédéterminé pour être révélé par ledit bloc.

8. Bloc de construction selon l'une quelconque des revendications 1 à 7, **caractérisé en ce que** lesdits membres translucides (4) et ladite structure d'accrochage (5) ayant un seul corps intégré moulé par une matière plastique transparente.

9. Bloc de construction selon l'une quelconque des revendications 1 à 8, **caractérisé en ce que** lesdites première et seconde surfaces limites (2, 3) sont parallèles et les buts desdits membres translucides (4) sont dans l'alignement ou s'avancent légèrement desdites surfaces limites (2, 3).

10. Procédé pour la préparation du bloc de construction selon la revendication 9 (l'une quelconque des revendications 1 à 10?) comprenant les étapes d'arrangement et de positionnement de ladite structure mécanique intégrée dans une cavité de moule (17) ayant au moins des parois (15) opposés et un fond de manière a ce que lesdits membres translucides (4) étendent à travers lesdits parois (15) et de remplissage de la cavité de moule (17) avec une matière à mouler (7) fluide, et après *la prisse de la manière* à mouler, de la séparation du bloc de construction (1) et de la cavité de moule (17), **caractérisé en ce que** lors ladite étape d'arrangement et de positionnement on presse légèrement tous les membres translucides (4) par serrer lesdits parois l'un contre l'autre et on pose une feuille élastique (15a) entre lesdits membres translucides (4)et au moins l'un dudit parois (15).

11. Le procédé selon la revendication 10, **caractérisé en ce que** la feuille élastique (15a) est appliquée dans l'intérieur de parois (15).
